# EUROPEAN PATENT APPLICATION

(11) **EP 2 565 741 A2**
(43) Date of publication of application: **06.03.2013**
(21) Application number: 12166587.1
(22) Date of filing: 03.05.2012
(51) Int. Cl.: G06F 1/16

(54) **Display device having a resilient fastening unit**

(30) Priority: 01.09.2011 TW 100131453
(71) Applicant: Acer Incorporated, Taipei Hsien 221 (TW)
(72) Inventor: Kuo, Yan-Lin, 221 Taipei Hsien (TW)
(74) Representative: Becker Kurig Straus

(57) **Abstract**

A display device includes a housing, a combining unit, a panel module, and a resilient fastening unit. The combining unit is disposed on the housing. The resilient fastening unit is disposed on the panel module and the combining unit. Therefore, the width of the non-display edge zone of the display device and the light leakage of the display device can be reduced.

## Description

### CROSS-REFERENCE TO RELATED APPLICATIONS

This Application claims priority of Taiwan Patent Application No. 100131453, filed on Sep. 1, 2011, the entirety of which is incorporated by reference herein.

### BACKGROUND OF THE INVENTION

### Field of the Invention

The invention relates to a display device, and in particular to a display device having a resilient fastening unit.

### Description of the Related Art

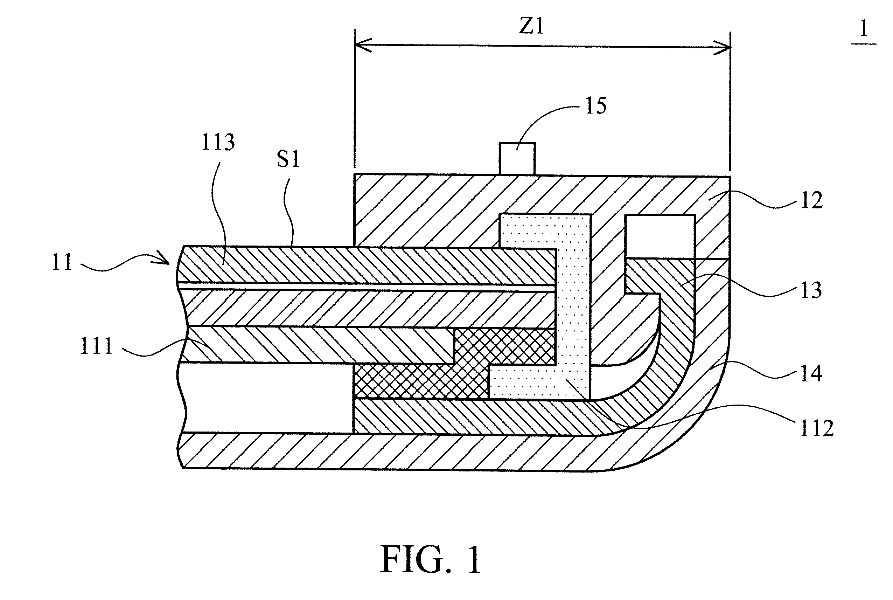

Please refer to Fig. 1, which is a cross-sectional schematic view of the display device 1 of the prior art. The display device 1 includes a panel module 11, a side cover 12, a combining unit 13, a housing 14, and a plurality of the resilient protrusions 15. The panel module 11 is fixed on the housing 14 via the side cover 12 and the combining unit 13. The resilient protrusions 15 are disposed on the side cover 12 to prevent the panel module 11 from being damaged.

In the prior art, the backlight panel 111 and the LCD Panel 113 of the panel module 11 are combined by the frame 112. However, since the frame 112 protrudes beyond the display surface S1 of the panel module 11, the thickness of the display device 1 is increased, and the width of the non-display edge zone Z1 of the display device 1 is increased. Moreover, since the side cover 12 of the prior art needs to cover the frame 112 and hook the combining unit 13, the thickness of the display device 1 is further increased, and the width of the non-display edge zone Z1 of the display device 1 is further increased. Therefore, the display device 1 does not satisfy the requirement of lighting and thinning tendency today.

Usually, the side cover 12 is made of metal or hard plastic, and thus the side cover 12 has tolerance, and a gap may be formed between the side cover 12 and the display surface S1. A lightbeam emitted from the backlight panel 111 under the side cover 12 may pass through the gap. The light may leak from the edge of the display device 1, and thus the display quality of the display device 1 is reduced.

### BRIEF SUMMARY OF THE INVENTION

To solve the problems of the prior art, the object of the invention provides a display device including a resilient fastening unit and a panel module. The resilient fastening unit is disposed on the panel module to decrease the thickness of the display device, the width of the non-display edge zone, and the light leakage of the display device.

For the above objective, the invention provides a display device including a housing, a combining unit, a panel module, and a resilient fastening unit. The combining unit is disposed on the housing and provided with a top surface and an inner side. The panel module is provided with a display surface and an edge. The resilient fastening unit is made of resilient material, such as rubber. The resilient fastening unit includes a protection portion and a protrusion portion. The protection portion is located between the edge of the panel module and the inner side of the combining unit. The protrusion portion is extended from the protection portion, and protrudes beyond the display surface and the top surface.

For the above objective, the invention provides a display device including a housing, a panel module, and a resilient fastening unit. The housing is provided with a side wall. The side wall is provided with a top surface and an inner side. The panel module is provided with a display surface and an edge. The resilient fastening unit is made of resilient material, such as rubber. The resilient fastening unit includes a protection portion and a protrusion portion. The protection portion is located between the edge of the panel module and the inner side of the side wall. The protrusion portion is extended from the protection portion, and protrudes beyond the display surface and the top surface.

In conclusion, the thickness of the display device and the width of the non-display edge zone of the display device can be decreased by the resilient fastening unit combining with the panel module and the combining unit, or by the resilient fastening unit combining the panel module with the side wall of the housing. Moreover, since the resilient fastening unit is made of resilient material, such as rubber, the resilient fastening unit is well attached to the display surface of the panel module. Thus, the light leakage of the display device is decreased.

### BRIEF DESCRIPTION OF THE DRAWINGS

The invention can be more fully understood by reading the subsequent detailed description and examples with references made to the accompanying drawings, wherein:

Fig. 1 is a cross-sectional schematic view of a display device of the prior art;

Fig. 2 is a perspective view of an electronic equipment of a first embodiment of the invention;

Fig. 3 is a cross-sectional schematic view of a display device of the first embodiment;

Fig. 4 is a cross-sectional schematic view of the display device without a resilient fastening unit of the first embodiment;

Fig. 5 is a cross-sectional schematic view of a display device of a second embodiment of the invention; and

Fig. 6 is a cross-sectional schematic view of a display device without a resilient fastening unit of the second embodiment.

### DETAILED DESCRIPTION OF THE INVENTION

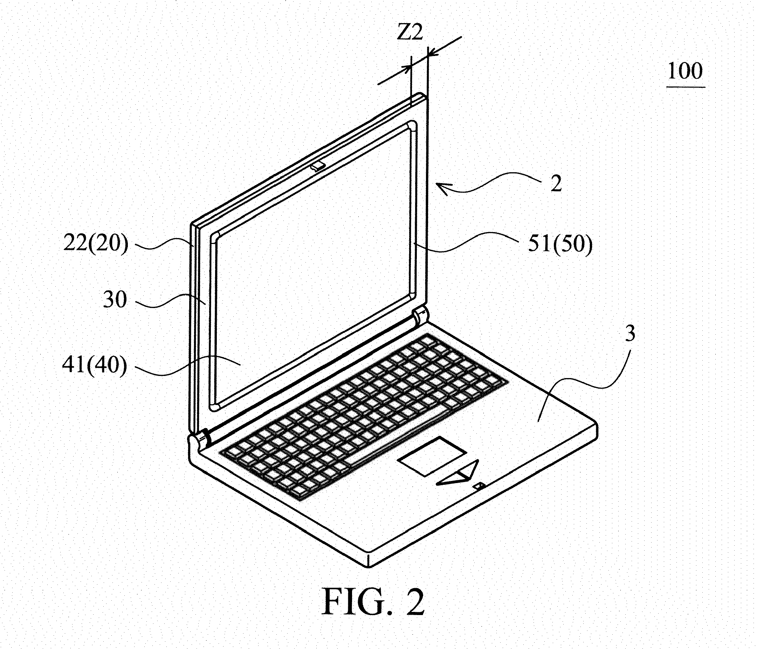

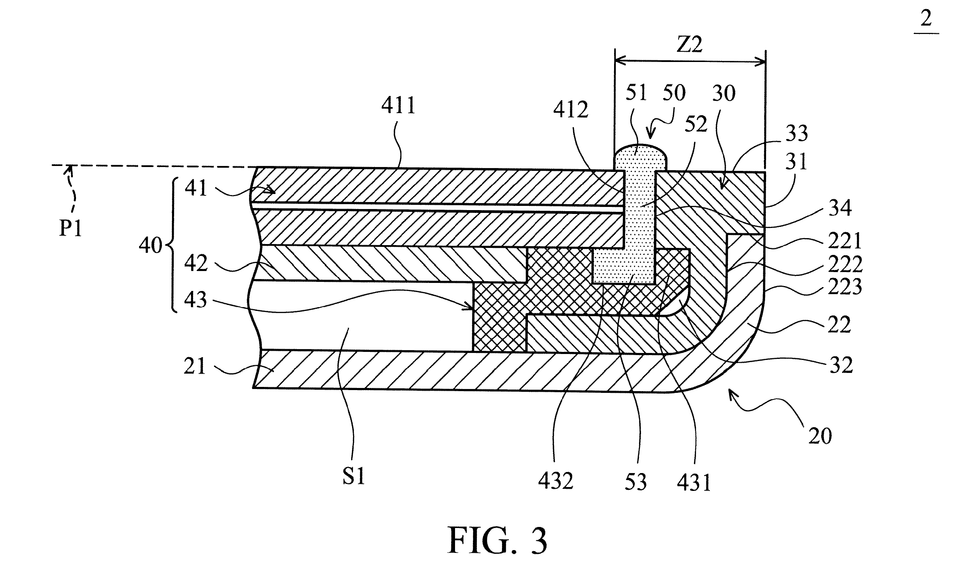

Please refer to Figs. 2 and 3. Fig. 2 is a perspective view of an electronic equipment 100 of a first embodiment of the invention, and Fig. 3 is a cross-sectional schematic view of a display device 2 of the first embodiment. The electronic equipment 100 is an electronic equipment with a display, such as a notebook, a laptop computer, or a liquid crystal display. In the embodiment, the electronic equipment 100 is a notebook. The electronic equipment 100 includes a display device 2 and a base 3. The display device 2 is disposed on the base 3. The display device 2 includes a housing 20, a combining unit 30, a panel module 40, and a resilient fastening unit 50.

The housing 20 includes a housing body 21 and a side wall 22. The side wall 22 is a ring-shaped structure. The side wall 22 is extended from the edge of the housing body 21 and substantially perpendicular to the housing body 21. The combining unit 30 is a ring-shaped structure, and substantially extends along the side wall 22. The combining unit 30 is fixed on the housing body 21 and the side wall 22 of the housing 20. A receiving space S1 is formed inside the housing 20 and the combining unit 30. In the embodiment, the combining unit 30 covers the top surface 221 and the inner side 222 of the side wall 22. The edge of the outer side 31 of the combining unit 30 is aligned to the edge of the outer side 223 of the side wall 22. In another embodiment, the combining unit 30 may not be fixed on the housing body 21.

The panel module 40 is disposed in the receiving space S1. The panel module 40 includes an LCD (Liquid crystal display) Panel 41, a backlight panel 42, and a latching unit 43. The LCD Panel 41 and the backlight panel 42 are stacked. The latching unit 43 is a ring-shaped structure substantially corresponding to the side wall 22. The latching unit 43 is fixed on the edges of the LCD Panel 41 and the backlight panel 42, and utilized to combine the LCD Panel 41 with the backlight panel 42. The latching unit 43 may contact the housing body 21.

The latching unit 43 includes a plurality of latching portions 431 and a receiving groove 432. Only one latching portion 431 is shown in Fig. 3. However, the number is not limited thereto, there can be many latching portions 431 distributed on the ring-shaped latching unit 43. The panel module 40 is assembled to the housing 20 by hooking the latching portion 431 on the locking groove 32 of the combining unit 30.

The resilient fastening unit 50 is made of resilient material, such as rubber. The resilient fastening unit 50 is a ring-shaped structure corresponding to the side wall 22. The resilient fastening unit 50 is disposed between the panel module 40 and the combining unit 30. The resilient fastening unit 50 includes a protrusion portion 51, a protection portion 52, and a holding portion 53. The protrusion portion 51 and the holding portion 53 are extended from the protection portion 52. The protrusion portion 51, the protection portion 52, and the holding portion 53 are formed as a single piece.

The protrusion portion 51 protrudes beyond the display surface 411 of the LCD Panel 41 and the top surface 33 of the combining unit 30. Moreover, the protrusion portion 51 contacts the display surface 411 and the top surface 33. The display surface 411 and the top surface 33 are located on the same horizontal surface P1. Since the protrusion portion 51 is a ring-shaped structure and is made of resilient material, the protrusion portion 51 greatly protects the panel module 40 from damage. As shown in Fig. 3, the side cover of the prior art can be omitted, and the height of the protrusion portion 51 is substantially the same as the resilient protrusion of the prior art. Thus, the thickness of the display device 2 of the embodiment is greatly decreased.

The protection portion 52 contacts the edge 412 of the LCD Panel 41 and the inner side 34 of the combining unit 30. Since the protection portion 52 is made of the resilient material, the protection portion 52 provides a buffer force to prevent the display device 2 from damage and the edge 412 of the LCD Panel 41 from cracking. Since the holding portion 53 is disposed in the receiving groove 432 of the latching unit 43 and contacts the LCD Panel 41, the panel module 40 is fixed on the combining unit 30 solidly.

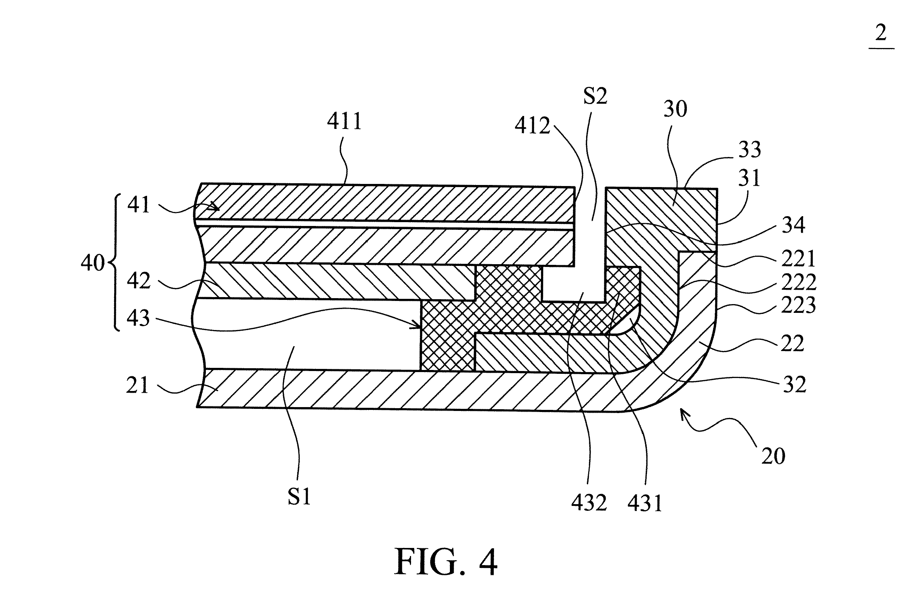

Please refer to Fig. 4. When a user wants to assemble the display device 2 of the embodiment, first, the combining unit 30 is fixed on the housing 20. The panel module 40 is assembled by assembling the LCD Panel 41, and the backlight panel 42, and the latching unit 43. Next, the panel module 40 is assembled to the receiving space S1 of the housing 20 by hooking the latching portion 431 of the latching unit 43 to the locking groove 32 of the combining unit 30. Then, the retaining groove S2 is formed between the panel module 40 and the combining unit 30. Finally, a resilient material is injected into the retaining groove S2 by injection molding, and the resilient fastening unit 50 is formed by the resilient material after the resilient material is solidified.

Therefore, please refer to Fig. 3 again, wherein by the resilient fastening unit 50 and the combining unit 30 of the embodiment, the frame of the prior art can be omitted. Moreover, the non-display edge zone Z2 of the display device 2 can be decreased, and thus the size of the display device 2 can be decrease.

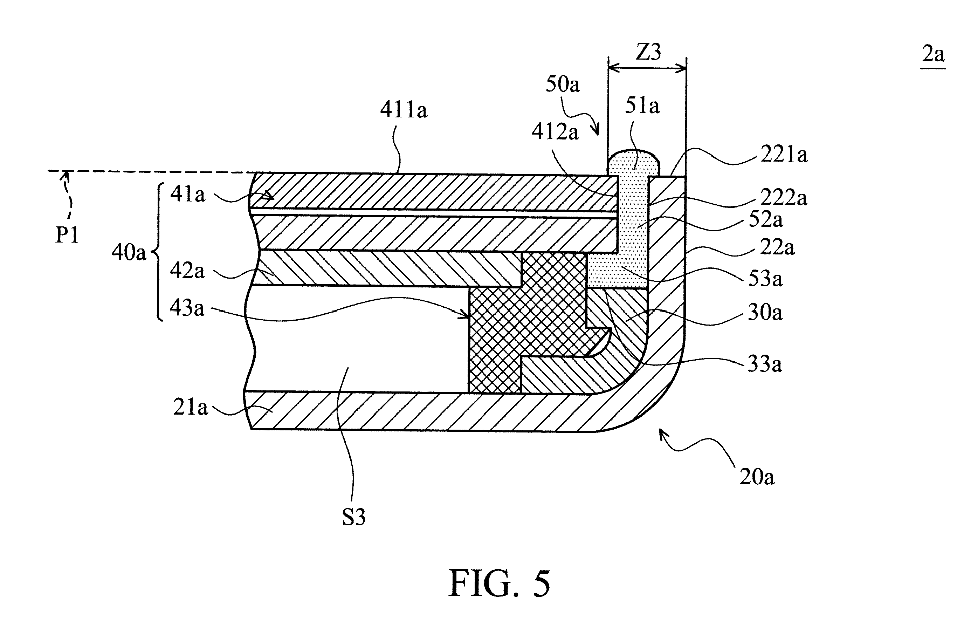

Please refer to Fig. 5, which is a cross-sectional schematic view of a display device 2a of a second embodiment of the invention. The differences between the second embodiment and the first embodiment are described as follows. A receiving space S3 is formed inside of the housing body 21a and the side wall 22a of the housing 20a. The top surface 221a of the side wall 22a and the display surface 411a of the LCD Panel 41a of the panel module 40a are located on the same horizontal surface P1. The combining unit 30a is disposed on the housing body 21a and the inner side 222a of the side wall 22a, and is located in the receiving space S3. In the embodiment, the combining unit 30a is not disposed on the top surface 221a of the side wall 22a.

The protrusion portion 51a protrudes beyond the display surface 411a and the top surface 221a of the side wall 22a, and the protrusion portion 51a contacts the display surface 411a and the top surface 221a of the side wall 22a. The protection portion 52a contacts the edge 412a of the LCD Panel 41a and the inner side 222a of the side wall 22a. The holding portion 53a contacts the inner side 222a of the side wall 22a, the LCD Panel 41a, the latching unit 43a, and the top surface 33a of the combining unit 30a. As shown in Fig. 5, the width of the non-display edge zone Z3 of the embodiment can be further decreased.

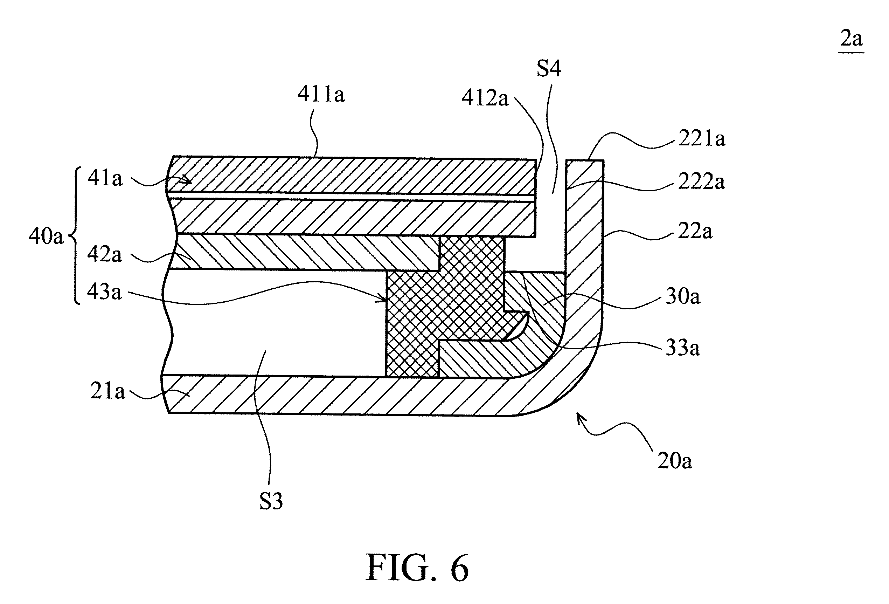

Please refer to Fig. 6, the retaining groove S4 are formed between the inner side 222a of the side wall 22, the top surface 33a of the combining unit 30a and the panel module 40a.

In conclusion, the thickness of the display device and the width of the non-display edge zone of the display device can be decreased by the resilient fastening unit combined with the panel module and the combining unit, or by the resilient fastening unit combining the panel module with the side wall of the housing. Moreover, since the resilient fastening unit is made of resilient material, such as rubber, the resilient fastening unit is well attached to the display surface of the panel module. Thus, the light leakage of the display device is decreased.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A display device, comprising:
a housing;
a combining unit, disposed on the housing, having a top surface and an inner side;
a panel module having a display surface and an edge; and
a resilient fastening unit comprising:
a protection portion located between the edge of the panel module and the inner side of the combining unit; and
a protrusion portion, extended from the protection portion, protruded beyond the display surface and the top surface.

2. The display device as claimed in claim 1, wherein the display surface and the top surface are located on a horizontal surface.

3. The display device as claimed in claim 1, wherein the housing is provided with a side wall, and the combining unit is disposed on the side wall.

4. The display device as claimed in claim 3, wherein the side wall is provided with a top surface and an inner side, and the combining unit is disposed on the top surface and the inner side of the side wall.

5. The display device as claimed in claim 1, wherein the panel module comprises:
an LCD Panel;
a backlight panel stacked on the LCD Panel; and
a latching unit contacting with the LCD Panel, the backlight panel, and the combining unit.

6. The display device as claimed in claim 5, wherein the combining unit comprises a locking groove, and the latching unit comprises a latching portion disposed in the locking groove.

7. A display device, comprising:
a housing having a side wall, wherein the side wall has a top surface and an inner side;
a panel module having a display surface and an edge; and
a resilient fastening unit, comprising:
a protection portion located between the edge of the panel module and the inner side of the side wall; and
a protrusion portion, extended from the protection portion, protruded beyond the display surface and the top surface.

8. The display device as claimed in claim 7, wherein the display surface and the top surface are located on a horizontal surface.

9. The display device as claimed in claim 7, further comprising a combining unit disposed on the housing and the panel module.

10. The display device as claimed in claim 9, wherein the housing further comprises a housing body disposed on the side wall, and the combining unit is disposed on the housing body and the inner side of the side wall.

11. The display device as claimed in claim 9, wherein the panel module comprises:
an LCD Panel;
a backlight panel stacked on the LCD Panel; and
a latching unit contacting with the LCD Panel, the backlight panel, and the combining unit.

12. The display device as claimed in claim 11, wherein the combining unit includes a locking groove, and the latching unit includes a latching portion disposed in the locking groove.
